# EUROPÄISCHE PATENTSCHRIFT

(11) **EP 3 823 743 B1**
(45) Veröffentlichungstag und Bekanntmachung des Hinweises auf die Patenterteilung: **20.04.2022**
(21) Anmeldenummer: 19813480.1
(22) Anmeldetag: 29.11.2019
(51) Int. Cl.: B01F 23/233, B01F 27/117, B01F 27/172, B01F 27/80, B01F 27/94, B01F 33/503, C02F 7/00, B01F 101/00

(54) **VORRICHTUNG ZUM BELÜFTEN VON GEWÄSSERN**
APPARATUS FOR AERATING BODIES OF WATER
DISPOSITIF D'OXYGÉNATION DES EAUX

(30) Priorität: 03.12.2018 DE 202018106871 U; 11.02.2019 DE 102019103252
(43) Veröffentlichungstag der Anmeldung: 26.05.2021
(73) Patentinhaber: INVENT Umwelt- und Verfahrenstechnik AG, 91058 Erlangen (DE)
(72) Erfinder: HÖFKEN, Marcus, 91054 Erlangen (DE); HAGSPIEL, Thomas, 92353 Postbauer-Heng (DE); FREY, Torsten, 90461 Nürnberg (DE); STEIDL, Walter, 90559 Burgthann (DE)
(74) Vertreter: Dr. Gassner & Partner mbB
(86) Internationale Anmeldenummer: PCT/EP2019/083097
(87) Internationale Veröffentlichungsnummer: WO 2020/114908

(56) Entgegenhaltungen:
- KR-Y1- 200 447 286
- US-A1- 2004 217 493
- US-A1- 2016 310 914

## Beschreibung

Die Erfindung betrifft eine Vorrichtung zum Belüften von Gewässern, insbesondere stehenden oder fließenden Gewässern, beispielsweise Seen, Teiche, Flüsse oder dgl.

Nach dem Stand der Technik ist es bekannt, Gewässer beispielsweise mit Rotations- oder Düsensystemen zu belüften. Derartige Belüftungssysteme bewirken üblicherweise eine Sauerstoffanreicherung lediglich im oberflächennahen Bereich. Andere nach dem Stand der Technik bekannte Lüftungssysteme, beispielsweise Rohr-, Kerzen- oder Tellerbelüfter, verursachen aufgrund ihrer begrenzten Dimension einen hohen Verrohrungs- und Installationsaufwand. Daneben ist es auch bekannt, Gewässer mittels Membranschläuchen zu belüften. Zur Halterung solcher Membranschläuche sind besondere Vorrichtungen erforderlich, welche insbesondere in natürlichen Gewässern ungeeignet sind.

US2004217493 offenbart eine Vorrichtung zum Belüften von Gewässern gemäß dem Oberbegriff des Anspruch 1. US2016310914 offenbart einen zweiteilig ausgeführten Belüftungs- und Rührkörper. Aufgabe der Erfindung ist es, die Nachteile nach dem Stand der Technik zu beseitigen. Es soll insbesondere eine möglichst einfach zu installierende Vorrichtung zum Belüften von Gewässern angegeben werden. Nach einem weiteren Ziel der Erfindung soll mit der Vorrichtung eine besonders effiziente Belüftung von Gewässern erreicht werden.

Diese Aufgabe wird durch die Merkmale des Anspruchs 1 gelöst. Zweckmäßige Ausgestaltungen der Erfindung ergeben sich aus den Merkmalen der abhängigen Patentansprüche.

Nach Maßgabe der Erfindung wird eine Vorrichtung zum Belüften von Gewässern gemäß dem Gegenstand von Anspruch 1 vorgeschlagen, umfassend eine Schwimmplattform,
einen auf der Schwimmplattform abgestützten Motor,
ein mit dem Motor gekoppeltes Getriebe, dessen Abtriebswelle als Hohlwelle ausgebildet ist,
ein Gebläse zum Zuführen von Luft durch eine damit verbundene Luftzuführleitung, wobei die Luftzuführleitung an das eine Ende der Hohlwelle angeschlossen ist,
eine mit dem anderen Ende der Hohlwelle gekoppelte hohle Rührwelle,
einen am freien Ende der sich etwa vertikal erstreckenden Rührwelle angebrachten Rührkörper,
wobei der Rührkörper als Hohlkörper ausgebildet ist und einen zentralen Durchbruch zum Durchführen von durch die Rührwelle zugeführter Luft sowie eine Vielzahl von Luftaustrittsöffnungen aufweist.

Die vorgeschlagene Vorrichtung lässt sich schnell und einfach installieren. Dazu ist es lediglich erforderlich, die Schwimmplattform in das zu belüftende Gewässer zu setzen und dort in geeigneter Weise zu verankern. Dabei können der Motor samt Getriebe, Hohlwelle und Rührkörper bereits vormontiert sein. Selbstverständlich kann es auch sein, dass die Rührwelle zusammen mit dem Rührkörper eine separate Montageeinheit bildet, welche erst nach dem Zuwasserlassen der Schwimmplattform an der Hohlwelle montiert wird.

Mit der vorgeschlagenen Vorrichtung ist es möglich, 80 bis 150 kg Sauerstoff pro Stunde einem Gewässer zuzuführen. Die vorgeschlagene Vorrichtung ermöglicht also eine besonders effiziente Belüftung insbesondere von natürlichen Gewässern.

Nach einer vorteilhaften Ausgestaltung ist das Gebläse auf der Schwimmplattform aufgenommen. In diesem Fall ist es nicht erforderlich, eine Luftzuführleitung von einem an Land befindlichen Gebläse bis hin zur Schwimmplattform zu verlegen. Die Installation der Vorrichtung vereinfacht sich damit.

Nach einer weiteren vorteilhaften Ausgestaltung sind der Motor und das Getriebe, vorzugsweise gemeinsam mit dem Gebläse und der Zuführleitung, von einem Gehäuse umgeben. Das Gehäuse schützt Motor und/oder Gebläse vor Witterungseinflüssen. Außerdem wirkt das Gehäuse vorteilhafterweise schalldämmend, sodass die vorgeschlagene Vorrichtung auch in dicht besiedeltem Gebiet einsetzbar ist.

Nach einer besonders vorteilhaften Ausgestaltung ist der Rührkörper ein Hyperboloidrührkörper, wobei die Luftaustrittsöffnungen an einem Umfangsrand des Hyperboloidrührkörpers vorgesehen sind. Ein Hyperboloidrührkörper bewirkt in vorteilhafter Weise einerseits eine rotierende Strömung, welche um die vertikale Rührwelle rotiert. Zusätzlich bewirkt der Hyperboloidrührkörper eine zirkulierende Strömung, welche von der Oberfläche des zu belüftenden Gewässers in axialer Richtung entlang der Rührwelle auf den Rührkörper gerichtet ist, dort in radiale Richtung umbiegt und anschließend wieder in vertikale Richtung zur Oberfläche des Gewässers aufsteigt. Das ermöglicht eine besonders intensive und effiziente Belüftung des Gewässers. Die Verwendung eines Hyperboloidrührkörpers verursacht dabei einen vergleichsweise geringen Energieverbrauch.

Nach einer vorteilhaften Ausgestaltung weist die Luftverteilungseinrichtung stromabwärts des Durchbruchs einen Luftverteilungsraum mit mehreren Luftverteilungsdurchbrüchen auf. Jeder Luftverteilungsdurchbruch mündet vorteilhafterweise in einen Luftkanal, welcher durch abschnittsweise radial verlaufende Wände begrenzt ist. Die abschnittsweise radial verlaufenden Wände biegen zweckmäßigerweise zum Umfangsrand des Hyperboloidrührkörpers hin in eine tangentiale Richtung um. Die Luftaustrittsöffnungen sind zweckmäßigerweise jeweils an radial außen liegenden Endabschnitten der Luftkanäle vorgesehen. - Die vorgeschlagene Gestaltung des Hyperboloidrührkörpers, insbesondere die Luftverteilungseinrichtung, nutzt soweit wie möglich die Geometrie des Hyperboloidrührkörpers. Es ergibt sich für die Gestaltung des Hohlkörpers eine kompakte Bauform. Das Vorsehen der Luftaustrittsöffnungen an den radial außen liegenden Endabschnitten der Luftkanäle trägt zu einer besonders effektiven Begasung des Gewässers bei.

Der Hyperboloidrührkörper ist aus einer den Anschlussabschnitt enthaltenden Oberschale und einer damit verbundenen Unterschale gebildet, wobei die Luftkanäle durch die Ober- und die Unterschale begrenzt werden. Infolgedessen lassen sich die Luftkanäle durch einfaches Fügen der Oberschale und der Unterschale herstellen. Zweckmäßigerweise erstrecken sich von der ersten Oberseite der Oberschale abschnittsweise radial verlaufende Transportrippen. Die Transportrippen können - ähnlich wie die Wände - zum Umfangsrand des Hyperboloidrührkörpers hin in eine tangentiale Richtung umbiegen. Zweckmäßigerweise erstrecken sich die Wände von einer zweiten Oberseite der Unterschale. Dabei entspricht nach einer besonders vorteilhaften Ausgestaltung der Verlauf der Wände dem Verlauf der Transportrippen, so dass beim Fügen der Ober- und der Unterschale sich jede Transportrippenunterseite jeweils auf eine Oberkante der Wände abstützt. Es ergibt sich damit eine besonders stabile und verwindungssteife Konstruktion. Ferner können so auf einfache Weise durch Fügen der Ober- mit der Unterschale die Luftkanäle hergestellt werden. - Die Wände können auch Öffnungen aufweisen oder aus mehreren Abschnitten gebildet sein, zwischen denen jeweils Lücken sich befinden.

Nach einer weiteren vorteilhaften Ausgestaltung ist die zweite Oberseite der Unterschale konkav, vorzugsweise hyperboloidartig, geformt. Sowohl die Ober- als auch die Unterschale können hyperboloidartig geformt sein. Es ergibt sich beim Fügen der Ober- mit der Unterschale ein besonders kompakter und stabiler Hohlkörper.

Zweckmäßigerweise sind die Luftaustrittsöffnungen in der Nähe eines Umfangsrands des Hohlkörpers vorgesehen. Insbesondere können die Luftaustrittsöffnungen in der Nähe eines Umfangsrands der Unterschale, insbesondere an einer der zweiten Oberseite gegenüberliegenden zweiten Unterseite der Unterschale vorgesehen sein. Vorteilhafterweise sind an der zweiten Unterseite radial nach außen sich erstreckende Scherrippen angebracht.

Zweckmäßigerweise ist zwischen 2 Scherrippen zumindest eine der Luftaustrittsöffnungen vorgesehen. Wegen der vorgeschlagenen Anordnung werden durch die Luftaustrittsöffnungen austretende Luftblasen sofort durch die Wirkung der Scherrippen zerstört und/oder fein in der umgebenden Flüssigkeit verteilt. Es gelingt damit eine besonders effiziente Begasung des Gewässers.

Die Ober- und die Unterschale können jeweils aus faserverstärktem Kunststoff hergestellt sein. Nach einer zweckmäßigen Ausgestaltung ist der Luftverteilungsraum aus einem rotationssymmetrischen, vorzugsweise konischen, Einsatz gebildet, in dessen Umfangswand die Luftverteilungsdurchbrüche vorgesehen sind. Auch der Einsatz kann aus faserverstärktem Kunststoff hergestellt sein. Infolgedessen lässt sich der Hohlkörper einfach aus wenigen Teilen, nämlich der Oberschale, der Unterschale und dem Einsatz, beispielsweise durch Verkleben, herstellen.

Nachfolgend werden Ausführungsbeispiele der Erfindung anhand der Zeichnung näher erläutert. Es zeigen:
- Fig. 1: eine teilweise aufgebrochene perspektivische Ansicht eines Hyperboloidrührkörpers,
- Fig. 2: eine Draufsicht auf eine Oberschale,
- Fig. 3: eine Unteransicht gemäß Fig. 2,
- Fig. 4: eine Draufsicht auf eine Unterschale,
- Fig. 5: eine Unteransicht gemäß Fig. 4,
- Fig. 6: eine schematische Schnittansicht durch ein Getriebe,
- Fig. 7: eine perspektivische Ansicht einer Vorrichtung zum Belüften von Gewässern und
- Fig. 8: eine Seitenansicht gemäß Fig. 7.

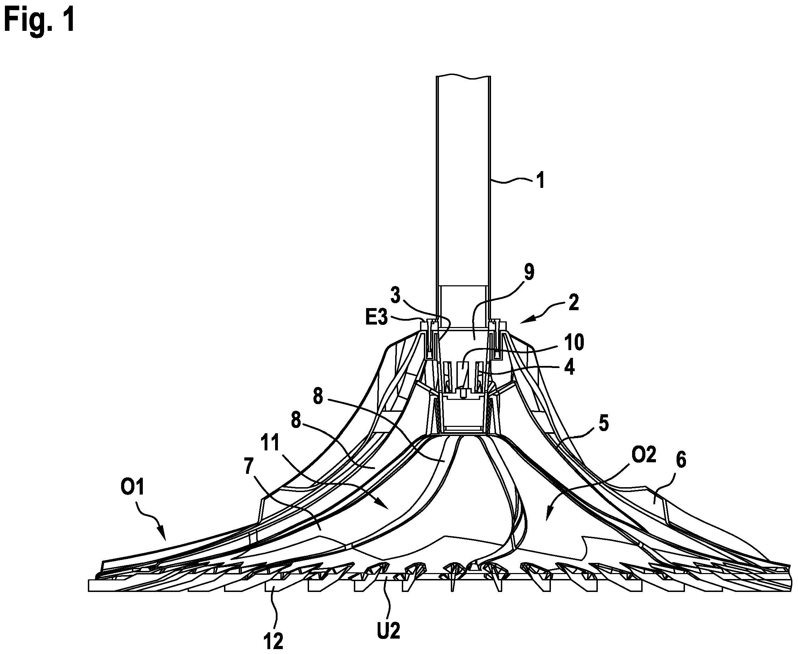

In Fig. 1 ist an einer hohlen Rührwelle 1 ein Hyperboloidrührkörper angebracht. Der Hyperboloidrührkörper weist einen mit dem Bezugszeichen 2 bezeichneten zentralen Anschlussabschnitt auf. Der Anschlussabschnitt 2 weist einen zentralen Durchbruch 3 zum Durchführen von Luft auf.

Mit dem Bezugszeichen 5 ist eine Oberschale bezeichnet, von deren erster Oberseite O1 sich Transportrippen 6 erstrecken. Mit dem Bezugszeichen 7 ist eine Unterschale bezeichnet, von deren zweiter Oberseite O2 sich Wände 8 erstrecken. Das Bezugszeichen 9 bezeichnet einen Einsatz, welcher stromabwärts des Durchbruchs 3 vorgesehen ist und einen Luftverteilungsraum 4 bildet. Der Einsatz 9 ist nach Art eines konischen Bechers ausgebildet und weist an seiner Umfangswand mehrere Luftverteilungsdurchbrüche 10 auf. Jeder der Luftverteilungsdurchbrüche 10 mündet in einen durch benachbarte Wände 8 sowie die Oberschale 5 und die Unterschale 7 gebildeten Luftkanal 11. An einer zweiten Unterseite U2 der Unterschale 7 sind an deren Umfangsrand Scherrippen 12 angebracht.

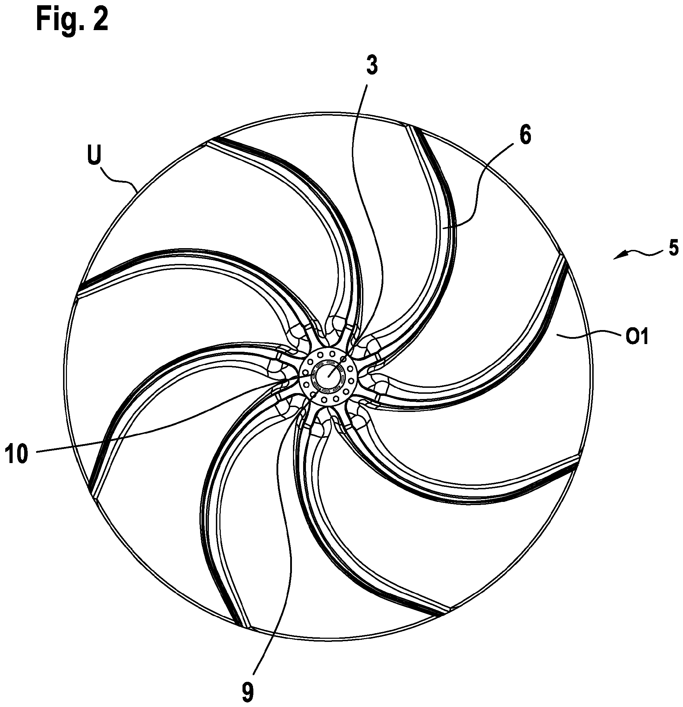

Fig. 2 zeigt eine Draufsicht auf die erste Oberseite O1 der Oberschale. Erkennbar sind die sich von der ersten Oberseite O1 erstreckenden Transportrippen 6, welche vom Durchbruch 3 her zunächst in eine radiale Richtung verlaufen und dann zum Umfangsrand U hin in eine tangentiale Richtung umbiegen. Ferner ist der dem Durchbruch 3 stromabwärts nachgeordnete Einsatz 9 mit den Luftverteilungsdurchbrüchen 10 erkennbar.

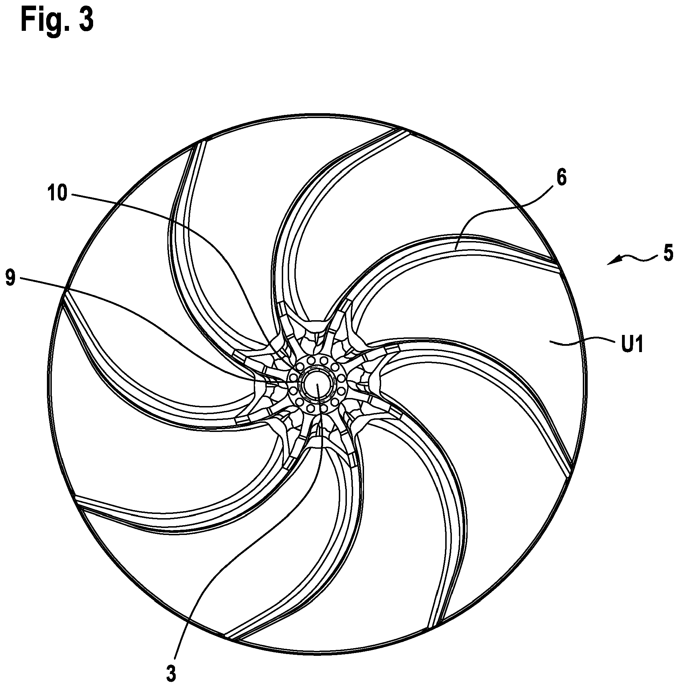

Fig. 3 zeigt eine Unteransicht gemäß Fig. 2. An einer ersten Unterseite U1 der Oberschale 5 sind die Transportrippen 6 in Form von Vertiefungen erkennbar.

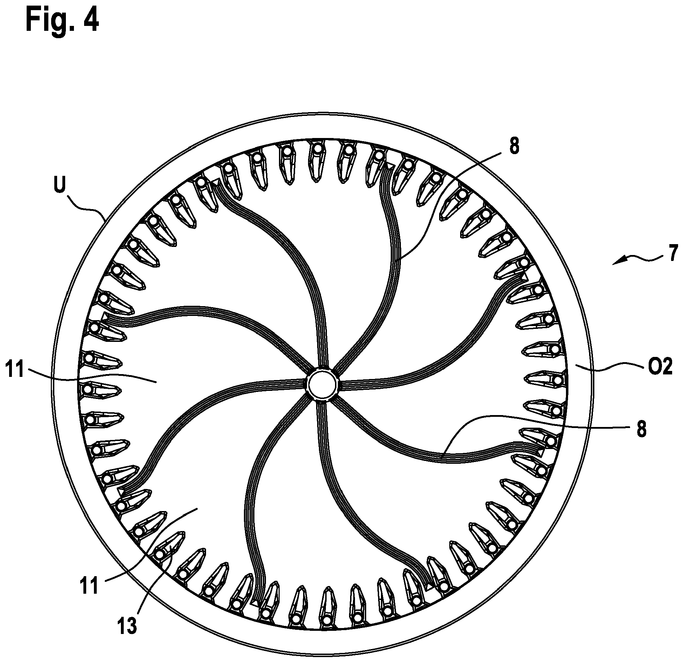

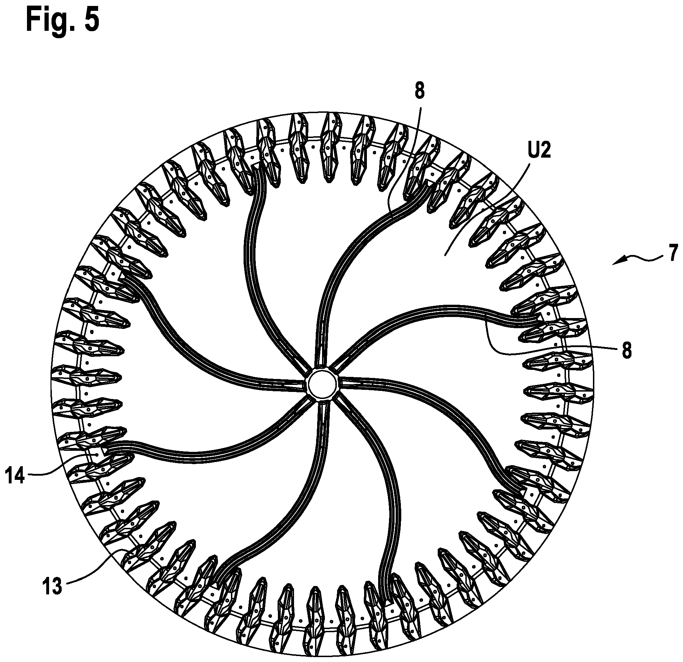

Fig. 4 zeigt eine Draufsicht auf die zweite Oberseite O2 der Unterschale 7. Die Unterschale 7 ist in ihrem Zentrum, d. h. gegenüberliegend dem in der Oberschale 5 vorgesehenen Durchbruch 3, geschlossen ausgebildet. Von der zweiten Oberseite O2 erstrecken sich die Wände 8. Die Wände 8 verlaufen - ähnlich wie die Transportrippen 6 - vom Zentrum her zunächst in einer radialen Richtung und biegen dann zum Umfangsrand U hin in eine im Wesentlichen tangentiale Richtung um. Am Umfangsrand U befinden sich eine Vielzahl von Halteeinrichtungen 13, welche Vertiefungen in der zweiten Oberseite O2 bilden. Die Halteeinrichtungen 13 dienen - wie insbesondere aus der nachfolgend erläuterten Fig. 5 ersichtlich ist - der Aufnahme und Befestigung der Scherrippen 12.

Fig. 5 zeigt eine Unteransicht gemäß Fig. 4. An einer zweiten Unterseite U2 der Unterschale sind die Wände 8 in Form von Vertiefungen erkennbar. Die Halteeinrichtungen 13 erstrecken sich dagegen von der zweiten Unterseite U2. Es wird insoweit auch auf die Fig. 1 verwiesen. Zwischen jeweils zwei benachbarten Halteeinrichtungen 13 bzw. zwei benachbarten Scherrippen 12 ist jeweils eine Luftaustrittsöffnung 14 vorgesehen.

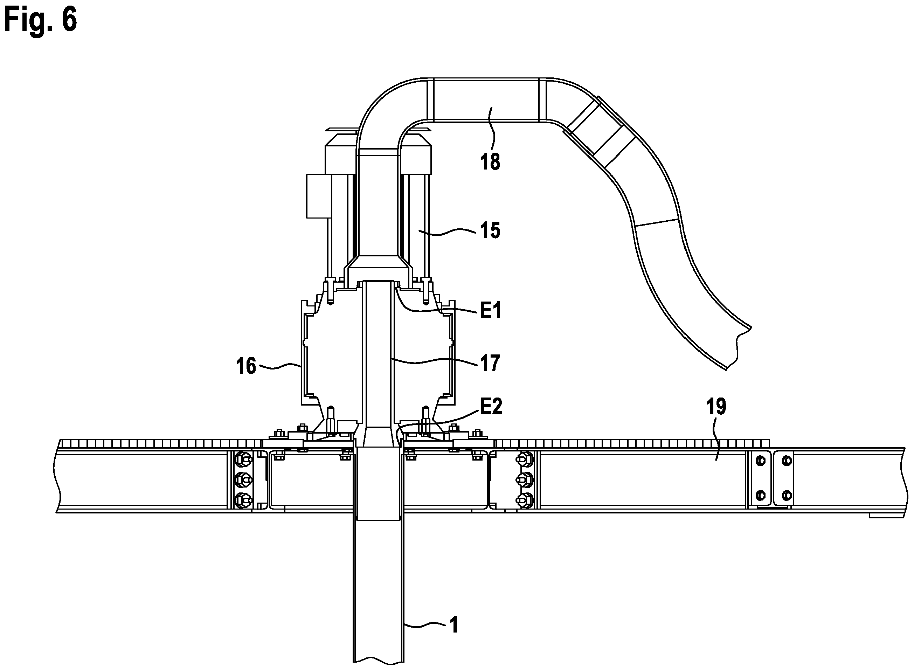

Fig. 6 zeigt eine schematische Schnittansicht durch ein Getriebe 16, welches antriebsmäßig mit einem Motor 15 verbunden ist. Das Getriebe 16 weist eine Getriebehohlwelle 17 auf, deren erstes Ende mit einer Luftzuführleitung 18 verbunden ist. Ein mit der Luftzuführleitung 18 verbundenes Gebläse ist hier nicht dargestellt. Ein zweites Ende E2 der Getriebehohlwelle 17 ist mit der hohlen Rührwelle 1 verbunden. Wie aus Fig. 1 ersichtlich ist, ist ein drittes Ende E3 der hohlen Rührwelle 1 mit dem in den Fig. 1 bis 5 gezeigten Hyperboloidrührkörper verbunden.

Die sich insbesondere aus den Fig. 1 und 6 ergebende Rühr- und Begasungseinrichtung kann beispielsweise an einem Floß 19 (siehe Fig. 6) angebracht sein. Damit lässt sich ein Gewässer, beispielsweise ein Teich, See oder dgl. effizient umwälzen und begasen.

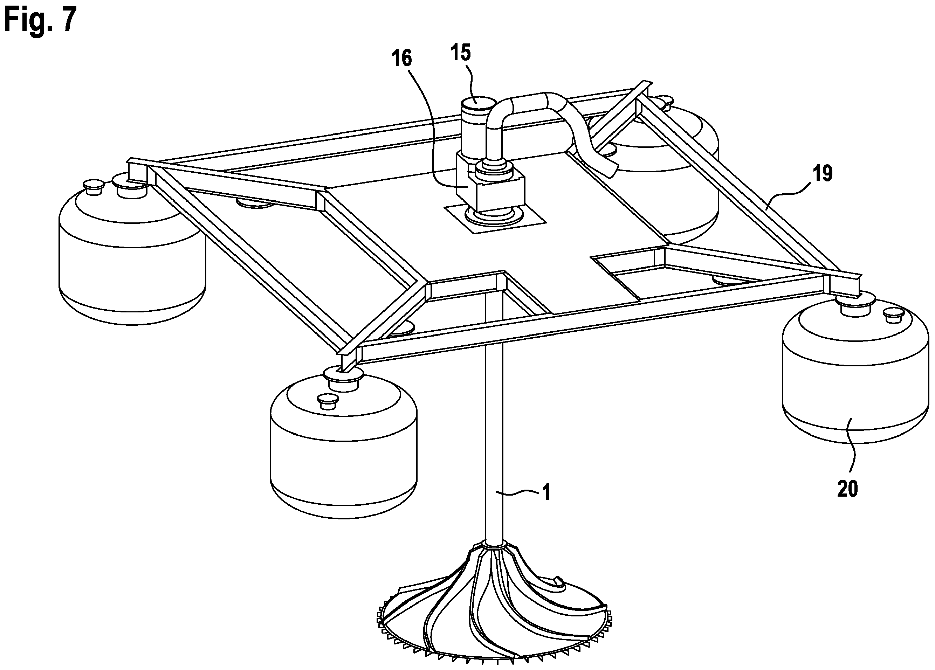

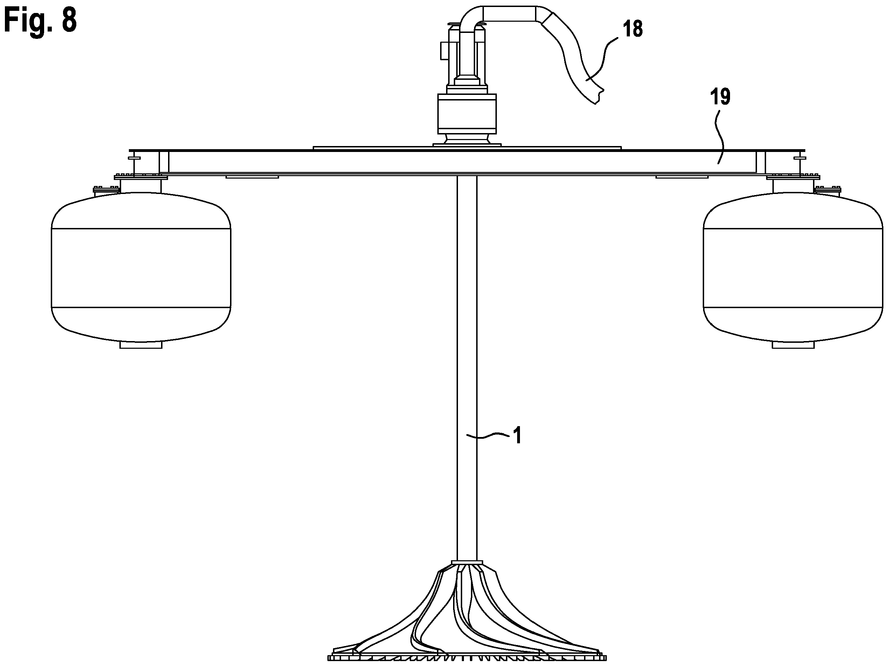

In den Fig. 7 und 8 sind mit dem Bezugszeichen 20 Schwimmkörper bezeichnet, welche an den vier Ecken eines im Wesentlichen rechteckig ausgestalteten Rahmens gehalten sind. Der Rahmen bildet mit dem Schwimmkörper 20 das Floß.

Obwohl vorstehend der Rührkörper in der Ausgestaltung eines Hyperboloidrührkörpers beschrieben worden ist, kann es nach dem Gegenstand der Erfindung selbstverständlich auch sein, dass der Rührkörper andersartig ausgestaltet ist. Vorteilhafterweise ist der Rührkörper allerdings rotationssymmetrisch ausgestaltet. Er kann auch nach Art eines Kegels oder Kegelstumpfs ausgebildet sein.

### Bezugszeichenliste

- 1: Rührwelle
- 2: Anschlussabschnitt
- 3: Durchbruch
- 4: Luftverteilungsraum
- 5: Oberschale
- 6: Transportrippe
- 7: Unterschale
- 8: Wand
- 9: Einsatz
- 10: Luftverteilungsdurchbruch
- 11: Luftkanal
- 12: Scherrippe
- 13: Halteeinrichtung
- 14: Luftaustrittsöffnung
- 15: Motor
- 16: Getriebe
- 17: Getriebehohlwelle
- 18: Luftzuführleitung
- 19: Floß
- 20: Schwimmkörper

- E1: Erstes Ende
- E2: Zweites Ende
- E3: Drittes Ende
- O1: Erste Oberseite
- O2: Zweite Oberseite
- U1: Erste Unterseite

## Patentansprüche

1. Vorrichtung zum Belüften von Gewässern, umfassend
eine Schwimmplattform (19),
einen auf der Schwimmplattform (19) abgestützten Motor (15),
ein mit dem Motor (15) gekoppeltes Getriebe (16), dessen Abtriebswelle als Hohlwelle (17) ausgebildet ist,
ein Gebläse zum Zuführen von Luft durch eine damit verbundene Luftzuführleitung (18), wobei die Luftzuführleitung (18) an das eine Ende (E1) der Hohlwelle (17) angeschlossen ist,
eine mit dem anderen Ende (E2) der Hohlwelle (17) gekoppelte hohle Rührwelle (1),
einen am freien Ende der sich etwa vertikal erstreckenden Rührwelle (1) angebrachten Rührkörper (K),
wobei der Rührkörper (K) als Hohlkörper ausgebildet ist und einen zentralen Durchbruch (3) zum Durchführen von durch die Rührwelle (1) zugeführter Luft sowie eine Vielzahl von Luftaustrittsöffnungen (14) aufweist,
**dadurch gekennzeichnet, dass**
die Luftaustrittsöffnungen (14) jeweils an radial außenliegenden Endabschnitten von Luftkanälen (11) vorgesehen sind, und
wobei die Vorrichtung aus einer einen Anschlussabschnitt enthaltenden Oberschale (5) und einer damit verbundenen Unterschale (7) gebildet ist, wobei die Luftkanäle (11) durch die Ober- (5) und die Unterschale (7) begrenzt werden.

2. Vorrichtung nach Anspruch 1, wobei das Gebläse auf der Schwimmplattform (19) aufgenommen ist.

3. Vorrichtung nach einem der vorhergehenden Ansprüche, wobei der Motor (15) und das Getriebe (16), vorzugsweise gemeinsam mit dem Gebläse und der Luftzuführleitung (18), von einem Gehäuse umgeben sind.

4. Vorrichtung nach einem der vorhergehenden Ansprüche, wobei der Rührkörper (K) ein Hyperboloidrührkörper ist, und wobei die Luftaustrittsöffnungen (14) an einem Umfangsrand des Hyperboloidrührkörpers vorgesehen sind.

5. Vorrichtung nach einem der vorhergehenden Ansprüche, wobei stromabwärts des Durchbruchs (3) eine Luftverteilungseinrichtung (4, 10, 11, 14) zum Verteilen von durch den Durchbruch (3) zugeführter Luft hin zu den Luftaustrittsöffnungen (14) vorgesehen ist.

6. Vorrichtung nach einem der vorhergehenden Ansprüche, wobei die Luftverteilungseinrichtung (4, 10, 11, 14) stromabwärts des Durchbruchs (3) einen Luftverteilungsraum (4) mit mehreren Luftverteilungsdurchbrüchen (10) aufweist.

7. Vorrichtung nach einem der vorhergehenden Ansprüche, wobei jeder Luftverteilungsdurchbruch (10) in einen Luftkanal (11) mündet, welcher durch abschnittsweise radial verlaufende Wände (8) begrenzt ist.

8. Vorrichtung nach einem der vorhergehenden Ansprüche, wobei sich von der ersten Oberseite (O1) der Oberschale (5) abschnittsweise radial verlaufende Transportrippen (6) erstrecken.

9. Vorrichtung nach einem der vorhergehenden Ansprüche, wobei sich die Wände (8) von einer zweiten Oberseite (O2) der Unterschale (7) erstrecken.

10. Vorrichtung nach einem der vorhergehenden Ansprüche, wobei der Verlauf der Wände (8) dem Verlauf der Transportrippen (6) entspricht, so dass beim Fügen der Ober- (5) und der Unterschale (7) sich jede Transportrippenunterseite jeweils auf eine Oberkante der Wände (8) abstützt.

11. Vorrichtung nach einem der vorhergehenden Ansprüche, wobei die zweite Oberseite (O2) der Unterschale (7) konkav, vorzugsweise hyperboloidartig, geformt ist.

12. Vorrichtung nach einem der vorhergehenden Ansprüche, wobei an einer der zweiten Oberseite (O2) gegenüberliegenden zweiten Unterseite der Unterschale (7) radial nach außen sich erstreckende Scherrippen (12) angebracht sind.

13. Vorrichtung nach einem der vorhergehenden Ansprüche, wobei die Luftaustrittsöffnungen (14) in der Nähe eines Umfangsrands der Unterschale (7) vorgesehen sind.

14. Vorrichtung nach einem der vorhergehenden Ansprüche, wobei jeweils zwischen zwei Scherrippen (12) eine der Luftaustrittsöffnungen (14) vorgesehen ist.

15. Vorrichtung nach einem der vorhergehenden Ansprüche, wobei die Ober-(5) und die Unterschale (7) jeweils aus faserverstärktem Kunststoff hergestellt sind.

16. Vorrichtung nach einem der vorhergehenden Ansprüche, wobei der Luftverteilungsraum (4) aus einem rotationssymmetrischen, vorzugsweise konischen, Einsatz gebildet ist, in dessen Umfangswand die Luftverteilungsdurchbrüche (10) vorgesehen sind.

17. Vorrichtung nach einem der vorhergehenden Ansprüche, wobei der Einsatz aus faserverstärktem Kunststoff hergestellt ist.

## Claims

1. A device for aerating bodies of water, comprising
a floating platform (19),
a motor (15) supported on the floating platform (19),
a transmission (16) coupled to the motor (15), the output shaft of the transmission being formed as a hollow shaft (17),
a fan for feeding air through an air feed line (18) connected to the fan, wherein the air feed line (18) is connected to one end (E1) of the hollow shaft (17),
a hollow agitator shaft (1) coupled to the other end (E2) of the hollow shaft (17),
an agitator body (K) attached to the free end of the approximately vertically extending agitator shaft (1),
wherein the agitator body (K) is formed as a hollow body and has a central aperture (3) for the passage of air fed through the agitator shaft (1) and has a plurality of air outlet openings (14),
**characterized in that** the air outlet openings (14) are each provided at radially outer end portions of the air channels (11), and
wherein the device is formed from an upper shell (5) containing a connection portion and a lower shell (7) connected to the upper shell, wherein the air channels (11) are delimited by the upper shell (5) and the lower shell (7).

2. The device according to claim 1, wherein the fan is received on the floating platform (19).

3. The device according to either one of the preceding claims, wherein the motor (15) and the transmission (16), preferably jointly with the fan and the air feed line (18), are surrounded by a housing.

4. The device according to any one of the preceding claims, wherein the agitator body (K) is a hyperboloid agitator body, and wherein the air outlet openings (14) are provided on a peripheral edge of the hyperboloid agitator body.

5. The device according to any one of the preceding claims, wherein an air distribution device (4, 10, 11, 14) for distributing air guided through the aperture (3) towards the air outlet openings (14) is provided downstream of the aperture (3).

6. The device according to any one of the preceding claims, wherein the air distribution device (4, 10, 11, 14), downstream of the aperture, has an air distribution space (4) with a plurality of air distribution apertures (10).

7. The device according to any one of the preceding claims, wherein each air distribution aperture (10) opens out into an air channel (11), which is delimited by walls (8) extending radially in sections.

8. The device according to any one of the preceding claims, wherein transport ribs (6) running radially in sections extend from the first upper side (01) of the upper shell (5).

9. The device according to any one of the preceding claims, wherein the walls (8) extend from a second upper side (O2) of the lower shell (7).

10. The device according to any one of the preceding claims, wherein the course of the walls (8) corresponds to the course of the transport ribs (6), such that, when the upper and lower shells (5, 7) are joined, each transport rib underside is supported on an upper edge of the walls (8).

11. The device according to any one of the preceding claims, wherein the second upper side (O2) of the lower shell (7) is formed in concave, preferably hyperboloid-like fashion.

12. The device according to any one of the preceding claims, wherein radially outwardly extending shearing ribs (12) are attached to a second underside of the lower shell (7) opposite the second upper side (O2).

13. The device according to any one of the preceding claims, wherein the air outlet openings (14) are provided in the vicinity of a peripheral edge of the lower shell (7).

14. The device according to any one of the preceding claims, wherein one of the air outlet openings (14) is provided between each two shearing ribs (12).

15. The device according to any one of the preceding claims, wherein the upper shell (5) and the lower shell (7) are each produced from fibre-reinforced plastic.

16. The device according to any one of the preceding claims, wherein the air distribution space (4) is formed from a rotationally symmetrical, preferably conical insert, with the air distribution apertures (10) provided in the peripheral wall of said insert.

17. The device according to any one of the preceding claims, wherein the insert is produced from fibre-reinforced plastic.

## Revendications

1. Dispositif d'oxygénation des eaux comprenant
une plateforme flottante (19)
un moteur (15) soutenu sur la plateforme flottante (19),
une transmission (16) accouplée au moteur (15) et dont l'arbre de sortie se présente sous forme d'arbre creux (17),
une soufflante destinée à acheminer de l'air à travers une conduite d'alimentation en air (18) reliée à ladite soufflante, la conduite d'alimentation en air (18) étant raccordée à une extrémité (E1) de l'arbre creux (17),
un arbre d'agitation (1) creux accouplé à l'autre extrémité (E2) de l'arbre creux (17),
un corps d'agitation (K) monté à l'extrémité libre de l'arbre d'agitation (1) qui s'étend approximativement verticalement,
le corps d'agitation (K) se présentant sous forme de corps creux et comportant un passage (3) central destiné à faire passer l'air acheminé à travers l'arbre d'agitation (1) ainsi qu'une pluralité d'ouvertures de sortie d'air (14),
**caractérisé en ce que** les ouvertures de sortie d'air (14) sont prévues respectivement sur des sections d'extrémité radialement extérieures de conduits d'air (11), et
**en ce que** le dispositif est composé d'une coque supérieure (5) contenant une section de raccordement et une coque inférieure (7) qui y est reliée, les conduits d'air (11) étant limités par la coque supérieure (5) et la coque inférieure (7).

2. Dispositif selon la revendication 1, en ce que la soufflante est positionnée sur la plateforme flottante (19).

3. Dispositif selon l'une des revendications précédentes, en ce que le moteur (15) et la transmission (16), de préférence avec la soufflante et la conduite d'alimentation en air (18), sont entourés par un boîtier.

4. Dispositif selon l'une des revendications précédentes, en ce que le corps d'agitation (K) est un corps d'agitation hyperboloïde, et en ce que les ouvertures de sortie d'air (14) sont prévues sur un bord périphérique du corps d'agitation hyperboloïde.

5. Dispositif selon l'une des revendications précédentes, en ce qu'un système de distribution d'air (4, 10, 11, 14) destiné à diffuser de l'air acheminé à travers le passage (3) vers les ouvertures de sortie d'air (14) est prévu en aval du passage (3).

6. Dispositif selon l'une des revendications précédentes, en ce que le système de distribution d'air (4, 10, 11, 14) comporte en aval du passage (3) un espace de distribution d'air (4) avec plusieurs passages de distribution d'air (10).

7. Dispositif selon l'une des revendications précédentes, en ce que chaque passage de distribution d'air (10) débouche dans un conduit d'air (11), lequel est limité par des parois (8) s'étendant en partie radialement.

8. Dispositif selon l'une des revendications précédentes, en ce que des nervures de transport (6) s'étendent en partie radialement depuis la première face supérieure (O1) de la coque supérieure (5).

9. Dispositif selon l'une des revendications précédentes, en ce que les parois (8) s'étendent depuis une deuxième face supérieure (O2) de la coque inférieure (7).

10. Dispositif selon l'une des revendications précédentes, en ce que le tracé des parois (8) correspond au tracé des nervures de transport (6), de sorte que lors de l'assemblage de la coque supérieure (5) et de la coque inférieure (7) chaque face inférieure des rainures de transport s'appuie respectivement sur un bord supérieur des parois (8).

11. Dispositif selon l'une des revendications précédentes, en ce que la deuxième face supérieure (O2) de la coque inférieure (7) est de forme concave, de préférence hyperboloïde.

12. Dispositif selon l'une des revendications précédentes, en ce que des nervures de cisaillement (12) s'étendant radialement vers l'extérieur sont montées sur une deuxième face inférieure de la coque inférieure (7) opposée à la deuxième face supérieure (O2).

13. Dispositif selon l'une des revendications précédentes, en ce que les ouvertures de sortie d'air (14) sont prévues à proximité d'un bord périphérique de la coque inférieure (7).

14. Dispositif selon l'une des revendications précédentes, en ce qu'une des ouvertures de sortie d'air (14) est prévue respectivement entre deux nervures de cisaillement (12).

15. Dispositif selon l'une des revendications précédentes, en ce que la coque supérieure (5) et la coque inférieure (7) sont réalisées respectivement en matière plastique renforcée de fibres.

16. Dispositif selon l'une des revendications précédentes, en ce que l'espace de distribution d'air (4) est formé à partir d'un insert à symétrie de révolution, de préférence conique, dans la paroi périphérique duquel sont prévus les passages de distribution d'air (10).

17. Dispositif selon l'une des revendications précédentes, en ce que l'insert est réalisé en matière plastique renforcée de fibres.
